(19) Europäisches Patentamt / European Patent Office / Office européen des brevets

(11) **EP 3 191 012 B1**

(12) **FASCICULE DE BREVET EUROPEEN**

(45) Date de publication et mention
de la délivrance du brevet:
**29.05.2019 Bulletin 2019/22**

(21) Numéro de dépôt: **15742285.8**

(22) Date de dépôt: **28.07.2015**

(51) Int Cl.:
***A61C 8/00*** *(2006.01)*

(86) Numéro de dépôt international:
**PCT/EP2015/067261**

(87) Numéro de publication internationale:
**WO 2016/016236 (04.02.2016 Gazette 2016/05)**

(54) **IMPLANT DENTAIRE**

ZAHNIMPLANTAT

DENTAL IMPLANT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.07.2014 BE 201400586**

(43) Date de publication de la demande:
**19.07.2017 Bulletin 2017/29**

(73) Titulaire: **Nobel Biocare Services AG
8302 Kloten (CH)**

(72) Inventeur: **ROMPEN, Eric
B-4053 Embourg (BE)**

(74) Mandataire: **Capré, Didier
Nobel Biocare Services AG
Intellectual Property Department
Balz-Zimmermann-Strasse 7
8302 Kloten (CH)**

(56) Documents cités:
**WO-A1-2011/085982      WO-A2-2010/021478
DE-U1-202013 002 300    KR-A- 20110 052 766
US-A- 3 466 748**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un implant dentaire formé d'un corps d'ancrage défini entre une extrémité apicale et une extrémité cervicale, lequel corps d'ancrage est un corps d'une première longueur prédéterminée et présente sur sa surface externe et le long de toute ladite première longueur prédéterminée au moins un filet.

De préférence l'implant dentaire est réalisé en titane mais une alternative au titane, pour réaliser l'implant dentaire, consiste à choisir de la zircone, un alliage de ces deux éléments, ou tout autre matériau biocompatible.

Un implant dentaire est classiquement utilisé pour réaliser une prothèse dentaire, en vue de redonner à un patient, partiellement ou totalement édenté, une fonction de mastication, un confort buccal et une esthétique.

A cette fin, lors de la pose de l'implant, ce dernier est d'abord fixé par vissage dans un logement préalablement formé dans l'os de la mâchoire, sur un site d'implantation. Ensuite, un élément prothétique, fixe ou amovible, est placé sur l'implant par l'intermédiaire d'un pilier ou d'un col : on obtient donc une prothèse constituée de l'élément prothétique monté sur un ensemble prothétique comprenant l'implant et le col ou le pilier.

En général, les implants dentaires connus de l'état de l'art sont formés par un corps d'ancrage fileté de diamètre externe compris entre 3 mm et 6 mm, ce diamètre étant choisi de façon à autoriser une distribution des charges de pression lors de la pose de l'élément prothétique et lors de la mastication.

Le document US3466748 décrit un implant dentaire présentant un corps d'ancrage comprenant plusieurs parties distinctes : une première partie filetée dont le diamètre des spires (formant le filet) est constant sur toute la hauteur et une deuxième partie dont les diamètres des spires (formant le filet) diminuent le long de l'implant dentaire vers son extrémité apicale. Le corps d'ancrage présente également des parties non filetées dont l'extrême portion du corps d'ancrage en contact avec le support de la prothèse : la partie coronaire de l'implant dentaire selon ce document antérieur n'est donc pas filetée. En outre, l'implant dentaire selon ce document antérieur présente une partie centrale non filetée entre la première et la deuxième partie filetée, ce qui est problématique lorsqu'il s'agit de procéder au retrait de l'implant dentaire. En effet, dès lors que les tissus osseux reforment de l'os autour de la partie centrale de l'implant dentaire, ce dernier est véritablement bloqué et ne peut être dévissé puisque les partie filetées sont séparées par l'os reformé.

Le document WO2011/085982 divulgue également un premier implant dentaire dont la partie coronaire n'est pas filetée et un second implant dentaire dont seules deux parties distinctes présentent des filets. Plus particulièrement, selon ce second implant dentaire décrit dans ce document antérieur, les deux parties filetées sont destinées à être localisées dans l'os cortical tandis que la partie centrale de l'implant dentaire située entre ces deux parties filetées est dépourvue de filet. Il s'agit donc d'un ancrage bi-cortical responsable de déflexion latérale créant des problèmes de fixation de l'implant dentaire au niveau du col de ce dernier. En effet, l'os cortical étant plus dense que l'os spongieux, si la partie apicale de l'implant dentaire est fixée dans l'os cortical apical, la flexibilité de l'implant est réduite et des pressions plus importantes sont exercées sur l'os cortical cervical. C'est pourquoi il est nettement préférable que la partie apicale de l'implant dentaire soit stuée dans l'os spongieux.

D'ailleurs, ce type d'implant dentaire tel que celui décrit dans le document WO2011/085982 est de moins en moins utilisé d'une part à cause des problèmes liés à la déflexion latérale mais aussi, d'autre part, parce qu'ils ne peuvent pas être retirés par simple dévissage. En effet, comme pour l'implant dentaire divulgué dans le document US3466748, dès lors que les tissus osseux reforment de l'os autour de la partie centrale de l'implant dentaire, ce dernier est véritablement bloqué et ne peut être dévissé puisque les partie filetées sont séparées par l'os reformé.

Le document WO2010/021478 divulgue quant à lui un micro-implant dentaire (implant miniature) présentant des filets de diamètre croissant depuis la partie cervicale vers la partie apicale : c'est donc au niveau de la partie coronaire de cet implant dentaire de l'état de la technique que le diamètre des spires formant le filet est le plus faible.

Malheureusement, avec ces implants de l'état de la technique, la stabilité de l'os péri-implantaire n'est pas systématiquement garantie. En effet, des pertes osseuses post-opératoires en forme de cratère apparaissent fréquemment après un certain temps de fonctionnement, et s'accompagnent d'une perte d'attache de la muqueuse péri-implantaire caractérisée par la formation de poches entre gencive et implants dans lesquelles on observe une pénétration de la flore bactérienne buccale. En outre, comme indiqué plus haut, certains de ces implants dentaires ne peuvent pas être dévissés dès lors qu'ils sont véritablement bloqués dans l'os se reformant autour de l'implant dentaire.

Il est suggéré que les pertes osseuses péri-implantaires de l'os cortical cervical peuvent avoir différentes causes :

- d'une part, ces pertes peuvent être induites par un manque d'attache de la muqueuse lié par exemple à : (i) un manque de biocompatibilité du col ou du pilier, (ii) des dévissages trop fréquent des piliers, (iii) des techniques prothétiques inadaptées ; et/ou
- d'autre part, ces pertes peuvent être provoquées par une destruction osseuse induite, soit par des contraintes de mastication élevées entraînant des forces de cisaillement excessives à l'interface os/implant, soit par des déformations éventuelles des parois du corps d'implant.

La perte de masse osseuse au niveau de l'os cortical cervical (par définition peu vascularisé) défini en périphérie d'une extrémité cervicale de l'implant entraîne une réduction de la stabilité mécanique (stabilité primaire) et une augmentation progressive du bras de levier extra-osseux, ce qui amplifie progressivement les contraintes mécaniques engendrées sur l'ancrage osseux résiduel et donc une accélération possible de la destruction osseuse.

Outre la perte des qualités mécaniques de l'implant et donc des capacités masticatoires du patient, la perte de masse osseuse peut être à l'origine d'un recul de la gencive sur le site d'implantation ce qui a deux conséquences majeures. D'une part, la perte de la masse de gencive rend visible une partie du col ou du pilier de l'ensemble prothétique, ce qui diminue la qualité esthétique. D'autre part, la perte de la masse de la gencive correspond à une perte de la barrière naturelle aux bactéries présentes dans la cavité buccale qui, lorsque la perte de gencive est suffisamment importante autour du col ou du pilier, peuvent se loger entre l'implant et la gencive, ce qui résulte fréquemment en une inflammation de la gencive.

Plus dramatiquement, les bactéries peuvent pénétrer et s'établir en colonies dans la masse osseuse, ce qui se traduit par l'apparition d'infections ou la formation d'abcès au niveau de l'os, ce qui est particulièrement difficile à traiter.

Il existe donc un besoin d'obtenir un implant dentaire qui permette de diminuer, voire d'annihiler, ces pertes osseuses péri-implantaires post-opératoires de l'os cortical cervical. Il existe en outre un besoin de procurer un implant dentaire qui peut être facilement dévissé en vue par exemple de son remplacement.

Pour pallier ce besoin, il est prévu selon la présente invention un implant tel que décrit ci-dessus, caractérisé en ce que ledit corps d'ancrage présente sur au moins une portion coronaire de l'implant une partie dudit au moins un filet de diamètre nominal $d_n$ supérieur à un diamètre externe $d_e$ dudit corps d'ancrage sur ladite portion coronaire dans un premier rapport $d_n / d_e$ compris entre 2,00 et 4,00, de préférence entre 2,00 et 3,00.

De cette façon, de par les rapports entre le diamètre nominal du filet et le diamètre externe du corps d'ancrage prévus selon l'invention, on obtient un implant dont la stabilité mécanique est préservée tout en réduisant la pression exercée dans l'os cortical cervical.

En effet, dans le cadre de la présente invention, il a été observé de manière surprenante que, non seulement en réduisant le diamètre du corps d'ancrage et en augmentant le diamètre dudit au moins un filet dans le premier rapport $d_n / d_e$ compris entre 2,00 et 4,00, la stabilité mécanique de l'implant n'était pas dégradée, mais qu'au contraire la stabilité mécanique de l'implant est augmentée sur le long terme.

Suivant l'invention, il a par ailleurs été déterminé qu'un tel rapport doit être au moins observé au niveau de la partie (portion) coronaire de l'implant dentaire. Par les termes «partie ou portion coronaire de l'implant dentaire » on entend, au sens de la présente invention, la partie (ou portion) intra-osseuse de l'implant dentaire qui s'étend sur une longueur de 2 à 5mm, de préférence sur une longueur de 3 à 4mm depuis l'extrémité cervicale de l'implant dentaire en direction de la l'extrémité apicale de ce dernier.

Selon l'invention, il a été montré qu'une réduction du traumatisme induit à l'interface os/implant par les forces de mastication est obtenue grâce à l'augmentation du diamètre nominal (et donc de la largeur des spires) du pas de vis, qui permet d'accroître la surface de contact os/implant, d'augmenter le clavetage os/implant ainsi que la mise en compression de l'os tout en diminuant les forces de cisaillement.

Il est en outre observé qu'un corps d'implant moins creux que les implants de l'état de l'art, qui abritent un profond logement interne pour accueillir la vis de pilier, permet aussi une réduction des déformations des parois implantaires de l'implant sous les forces de mastication.

Cet objectif est atteint en réduisant de manière significative le diamètre du corps d'implant, en particulier dans la partie cervicale et en augmentant la largeur des spires pour assurer un bon ancrage dans l'os dur cortical. Par ailleurs, de larges spires permettent de créer de l'espace pour une génération d'os spongieux bien vascularisé entre les spires, de réduire le rapport en masse : matière d'implant (par exemple du titane)/os, tout en préservant une grande stabilité primaire (ou stabilité mécanique) lors du placement de l'implant et donc une stabilisation (ou une amélioration) de l'ancrage du corps d'implant au cours du temps.

En d'autres termes, dans le cadre de la présente invention, il a été déterminé qu'un implant dentaire suivant l'invention présente trois avantages principaux sans diminuer la stabilité primaire de l'implant (stabilité mécanique), c'est-à-dire sans diminuer l'ancrage des spires du filet de l'implant dentaire dans l'os périphérique :

- la surface de contact de l'implant dentaire est augmentée, ce qui permet de mieux répartir les contraintes mécaniques auxquelles est soumis l'implant dentaire ;
- les mises en compression des os dense/dur (os cortical) et spongieux sont augmentées, ce qui stimule une reformation rapide du tissu osseux (et donc de l'os) autour de l'implant dentaire ; et
- une quantité importante d'os vivant peut se reformer autour de l'implant dentaire dès lors que son filet présente des spires de grand diamètre entre lesquelles les tissus osseux peuvent se reformer et se fixer (régénération osseuse entre des spires de grande surface tout le long de l'implant dentaire), ce qui augmente le BIC, c'est-à-dire le Bone to Implant Contact.

Avantageusement, ledit corps d'ancrage est au moins en partie de forme sensiblement cylindrique ou présente une forme conico-cylindrique ou conique de conicité convergente vers ladite extrémité apicale.

De manière avantageuse, ladite portion coronaire est définie par une paroi latérale qui présente une première face vestibulaire et une deuxième face palatine, laquelle face palatine est dans une position décalée vers ladite extrémité cervicale par rapport à celle de la face vestibulaire selon un axe longitudinal traversant le corps d'ancrage et reliant ladite première extrémité cervical à ladite extrémité apicale.

Optionnellement, ledit corps d'ancrage présente, à son extrémité apicale, au moins une encoche de taraudage constituée d'au moins un évidement longitudinal, de préférence ménagé depuis l'extrémité apicale vers l'extrémité cervicale du corps d'ancrage.

D'autres formes de réalisation de la vis d'implant dentaire selon l'invention sont indiquées dans les revendications annexées.

La présente invention porte en outre sur un ensemble prothétique comprenant :

- ledit implant selon l'invention; et
- un élément transgingival, destiné à traverser la gencive et agencé pour être relié à la portion coronaire du corps d'ancrage. Cet élément transgingival est en outre destiné à supporter un élément prothétique.

De préférence, ledit élément transgingival est un col qui fait saillie à partir de l'extrémité cervicale d'implant et qui est disposé dans le prolongement de la portion coronaire du corps d'ancrage.

Avantageusement, l'élément transgingival est un pilier relié, de préférence de manière amovible, par un moyen de connexion à ladite portion coronaire du corps d'ancrage.

D'autres formes de réalisation de l'ensemble prothétique selon l'invention sont indiquées dans les revendications annexées.

D'autres caractéristiques et avantages de l'invention ressortiront de la description donnée ci-après, à titre non-limitatif.

La figure 1 illustre un premier mode de réalisation de l'implant selon l'invention.
La figure 2 illustre un premier mode de réalisation de l'ensemble prothétique selon l'invention.
La figure 3 illustre un deuxième mode de réalisation de l'ensemble prothétique selon l'invention.
La figure 4 illustre un troisième mode de réalisation de l'ensemble prothétique selon l'invention.

Sur les figures, les éléments analogues portent la même référence.

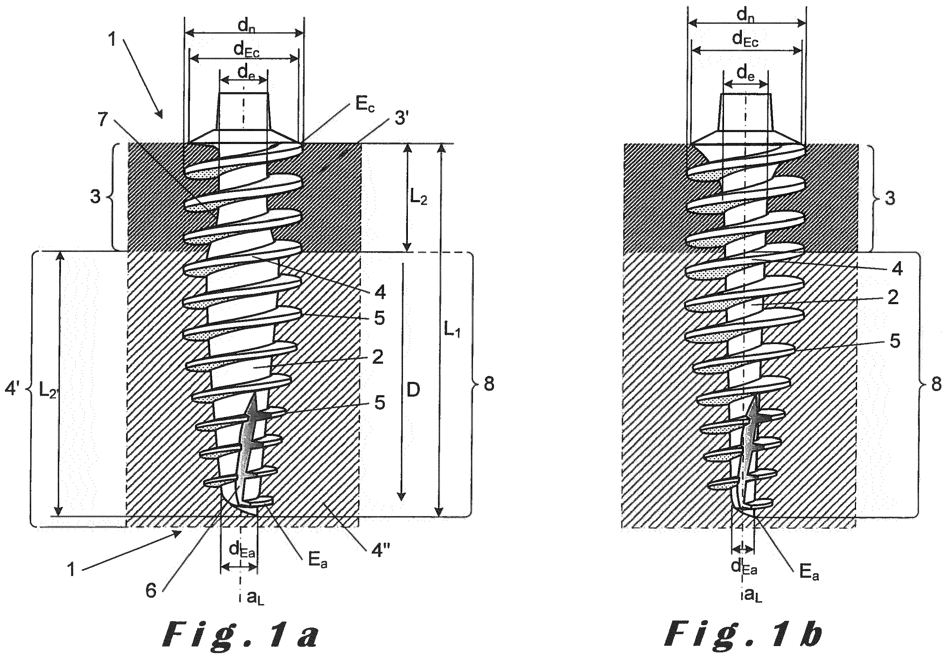

Les figures 1a et 1b illustrent un premier mode de réalisation de l'implant 1 selon l'invention.

Sur ces figures, est identifié le corps d'ancrage 2 de première longueur $L_1$ généralement comprise entre 10,00 mm et 15,00 mm, formant l'implant défini par une extrémité apicale $E_a$ et une extrémité cervicale $E_c$ reliées entre elles par un axe longitudinal $a_L$.

Cet axe longitudinal $a_L$, qui traverse le corps d'ancrage 2 depuis l'extrémité apicale $E_a$ vers l'extrémité cervicale $E_c$, correspond à l'axe de rotation d'un filet 4 présent sur une surface externe sur toute la longueur du corps d'ancrage 2.

Le filet 4 est un filet à pas positif, c'est-à-dire qui se visse dans une direction D de forage lorsque la vis est mise en rotation selon son axe de rotation $a_L$ dans le sens horloger.

Le corps d'ancrage 2 présente, sur au moins une portion coronaire 3 qui s'étend sur une deuxième longueur $L_2$ allant de 2,00 mm à 5,00 mm, une partie du filet 4 présentant un filetage (avec des spires) de diamètre nominal $d_n$ supérieur à un diamètre externe $d_e$ du corps d'ancrage 2 dans un premier rapport $R_1 = d_n / d_e$ compris entre 2,00 et 4,00, de préférence entre 2,00 et 3,90, avantageusement entre 2,00 et 3,80, de manière plus avantageuse entre 2,00 et 3,70, de manière alternative entre 2,00 et 3,60, dans un mode particulier de réalisation, entre 2,00 et 3,50.

Eventuellement, le premier rapport $R_1 = d_n / d_e$ est compris entre 2,00 et 3,40, de préférence entre 2,00 et 3,30, de manière plus avantageuse entre 2,00 et 3,20, de manière alternative entre 2,00 et 3,10, de manière optionnelle, entre 2,00 et 3,00.

Eventuellement, le premier rapport $R_1 = d_n / d_e$ est compris entre 2,00 et 3,00.

De préférence, le premier rapport $R_1 = d_n / d_e$ est compris entre 2,00 et 2,90, de préférence entre 2,00 et 2,80, avantageusement entre 2,00 et 2,70, de manière plus avantageuse entre 2,00 et 2,60, de manière alternative entre 2,00 et 2,50, dans un mode particulier de réalisation, entre 2,00 et 2,40.

Eventuellement, le premier rapport $R_1 = d_n / d_e$ est compris entre 2,00 et 2,30, de préférence entre 2,00 et 2,20, de manière plus avantageuse entre 2,00 et 2,10.

Le premier rapport $R_1 = d_n / d_e$ est de manière plus préférentielle égal à 2,00 ou 2,50.

Le premier rapport $R_1 = d_n / d_e$ est de manière encore plus préférentielle égal à 3,00 ou 3,50.

Le premier rapport $R_1 = d_n / d_e$ est de manière encore plus avantageuse égal à 4,00.

La longueur $L_2$ correspond à l'épaisseur moyenne de l'os cortical de la mâchoire.

Le diamètre nominal est le diamètre mesuré entre deux extrémité de crête du filet.

De manière préférentielle, le diamètre nominal $d_n$ du filet présente une valeur comprise dans une plage allant de 2,50 mm à 6,00 mm, de préférence dans une plage allant de 4,00 mm à 5,00 mm. Le diamètre externe $d_e$ du corps d'ancrage 2 est préférentiellement choisi dans une plage allant de 1,20 mm à 3,00 mm.

De préférence, le filet, présentant le rapport $R_1 = d_n / d_e$ défini ci-dessus, est présent au moins sur toute la longueur $L_2$ de la portion coronaire 3 d'implant 1.

Avantageusement, le filet, présentant le rapport $R_1 = d_n / d_e$ défini ci-dessus, est présent sur toute la longueur $L_1$ de l'implant.

Le corps d'ancrage 2 est de préférence un corps plein en titane ou en zircone de forme conique de conicité convergente vers ladite extrémité apicale $E_a$. En particulier, le corps d'ancrage 2 présente un diamètre externe d'extrémité apicale $d_{Ea}$ compris entre 1,50 mm et 2,00 mm et un diamètre externe d'extrémité cervicale $d_{Ec}$ compris entre 2,50 mm et 3,00 mm.

Le filet 4 est en outre caractérisé par un deuxième rapport $R_2 = n / L_1$ compris entre 0,50 mm$^{-1}$ et 1,00 mm$^{-1}$, de préférence entre 0,60 mm$^{-1}$ et 1,00 mm$^{-1}$, de manière avantageuse entre 0,70 mm$^{-1}$ et 1,00 mm$^{-1}$, n représentant un nombre prédéterminé de crêtes 5 du filet 4.

Le rapport $R_2$ représente donc la densité de crêtes par unité de longueur de l'implant. Par exemple, pour un implant de longueur $L_1$ égale à 10,00 mm, un rapport $R_2$ de 0,50 mm$^{-1}$ signifie que sur la longueur $L_1$, est formé un filet comprenant 5 crêtes.

Un rapport $R_2$ de 1,00 mm$^{-1}$ signifie que sur une longueur $L_1$ égale à 10,00 mm, est formé un filet comprenant 10 crêtes.

De manière avantageuse, le filet 4 est en outre caractérisé par un troisième rapport $R_3 = n / L_2$ compris entre 0,50 mm$^{-1}$ et 1,00 mm$^{-1}$, de préférence entre 0,60 mm$^{-1}$ et 1,00 mm$^{-1}$, de manière avantageuse entre 0,70 mm$^{-1}$ et 1,00 mm$^{-1}$, n représentant un nombre prédéterminé de crêtes 5 du filet 4.

Le rapport $R_3$ représente donc la densité de crêtes par unité de longueur $L_2$ de la portion coronaire 3 l'implant. Par exemple, pour une portion coronaire 3 de longueur $L_2$ égale à 3,00 mm, un rapport $R_3$ de 0,50 mm-1 signifie que sur la longueur $L_2$, est formé un filet comprenant 1,5 crêtes.

Un rapport $R_3$ de 1,00 mm$^{-1}$ signifie que, sur une longueur $L_2$ égale à 5,00 mm, est formé un filet comprenant 5 crêtes.

De préférence, le corps d'ancrage 2 présente, à son extrémité apicale $E_a$ au moins une encoche 6 de taraudage constituée d'un évidement longitudinal ménagé depuis l'extrémité apicale $E_a$ vers l'extrémité cervicale $E_c$ du corps d'ancrage 2.

Cette deuxième portion apicale 8 est typiquement ancrée dans la partie d'os spongieux 4" de profondeur prédéfinie 4' de la mâchoire.

Cette deuxième portion apicale est en outre définie par une longueur $L_{2'}$ qui est fonction de la profondeur 4' de la partie d'os spongieux 4".

Dans ce contexte, la longueur $L_1 = L_2 + L_{2'}$ de l'implant est donc fonction, d'une part, de la profondeur de l'os dur cortical 3' de la mâchoire, et d'autre part, de la profondeur 4' de la partie d'os spongieux 4" de la mâchoire.

De préférence, la deuxième portion 8 apicale présente une forme cylindrique ou conique de conicité convergente vers ladite extrémité apicale $E_a$.

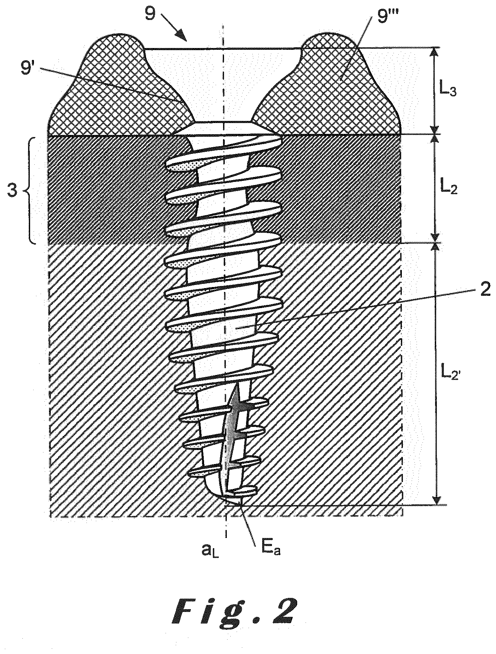

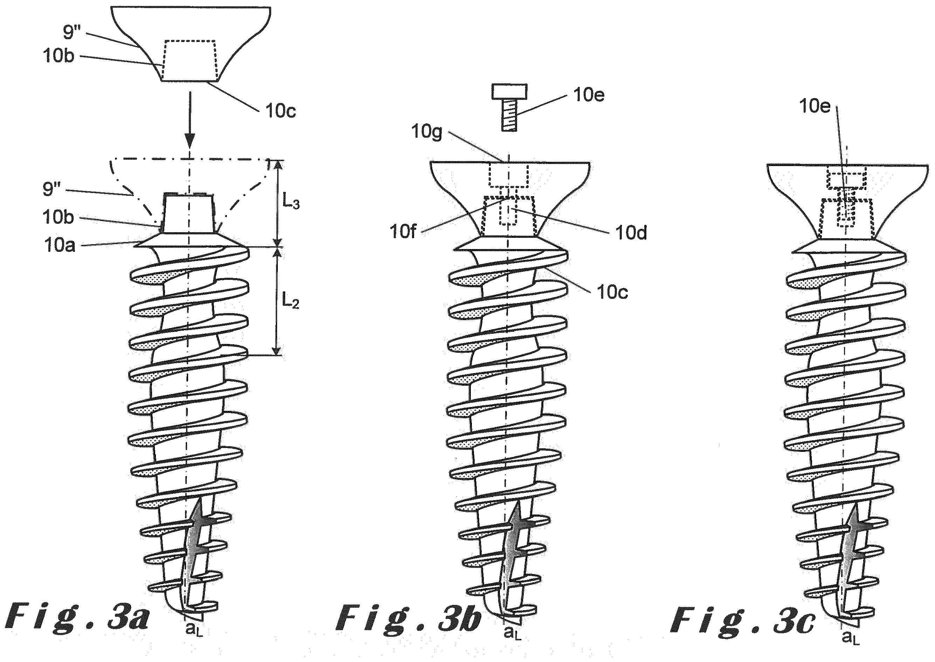

Les figures 2 et 3 illustrent deux modes différents de réalisation de l'ensemble prothétique comprenant :

- l'implant 1 selon l'invention ; et
- un élément transgingival 9 agencé pour être relié à la portion coronaire 3 du corps d'ancrage 2 et destiné à supporter un élément prothétique.

L'élément transgingival 9 présente une troisième longueur $L_3$ égale à une épaisseur de gencive 9''' du site d'implantation. De manière générale, cette troisième longueur $L_3$ est comprise entre 3,00 mm et 4,00 mm.

Dans un premier mode de réalisation de l'ensemble selon l'invention (figure 2), l'ensemble est un ensemble de type « *Tissue Level* » et comprend un élément transgingival 9 présent sous la forme d'un col 9' formé en saillie dans le prolongement de la première portion coronaire 3 du corps d'ancrage 2, selon l'axe longitudinal $a_L$, dans une direction opposée à l'extrémité apicale $E_a$ du corps d'ancrage 2. De cette façon, le col de prothèse 9 et le corps d'ancrage 2 forment un seul corps.

Dans un deuxième mode de réalisation de l'ensemble selon l'invention (figures 3a à 3c), l'ensemble est un ensemble de type « *Bone Level* » où l'élément transgingival 9 est un pilier 9" relié, de préférence de manière amovible, par un premier moyen de connexion 10 à la portion coronaire 3 du corps d'ancrage 2.

Le premier moyen de connexion 10 qui relie le pilier 9" à la portion coronaire 3 du corps d'ancrage 2 comprend un corps de tête 10a faisant saillie à partir de l'extrémité cervicale $E_c$ du corps d'ancrage 2 selon ledit axe longitudinal $a_L$, et présentant une base en biseau taillé obliquement par rapport à un plan horizontal passant par l'extrémité cervicale

$E_c$ du corps d'ancrage 2. Le corps de tête 10a fait saillie dans une direction opposée à ladite extrémité apicale $E_a$ du corps d'ancrage 3. Le corps de tête 10a est en outre agencé pour s'emboiter dans une première cavité 10b présente dans le pilier 9" à travers une ouverture 10c de cavité du pilier (figure 3a).

De préférence, le corps de tête 10a présente une forme conique et la première cavité 10b du pilier est de forme complémentaire à celle du corps de tête 10a. De préférence, la conicité du corps de tête 10a est supérieure à 0%, de préférence comprise entre 0,10% et 10%.

La conicité C d'un cône se définit dans le cadre de la présente invention comme suit :

$$C \text{ (en \%)} = [\,(\,d - D'\,)/H\,] \times 100$$

, où d correspond au diamètre d'extrémité basale du cône ;

D' correspond au diamètre d'extrémité cervicale du cône ; et

H correspond à la hauteur du cône.

De préférence, le corps de tête 10a comprend en outre une deuxième cavité 10d filetée agencée pour accueillir une vis 10e, présentant un corps de vis et une tête de vis, à travers une ouverture 10f de la cavité 10d de corps de tête 10a. Le pilier 9" présente un orifice 10g donnant accès à la cavité 10d du corps de tête 10a, de sorte que le pilier 9" puisse être relié en appui sur le corps de tête 10a par la tête de vis 10e qui, une fois vissée dans la deuxième cavité 10d du corps de tête 10a, compresse une partie de surface apicale du pilier 9" sur le corps de tête (figures 3b et 3c).

De manière alternative (non illustrée), le pilier 9" est muni, sur sa base, d'un élément apical faisant saillie depuis la base et agencé pour être logé dans une cavité formée dans la portion coronaire de l'implant, à travers une ouverture définie sur l'extrémité cervicale de l'implant.

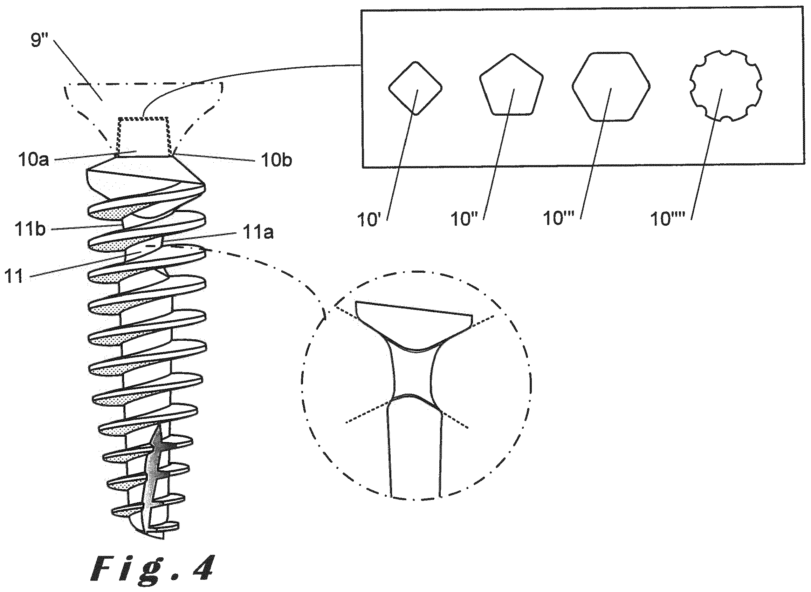

La figure 4 illustre un troisième mode de réalisation de l'ensemble prothétique selon une vue tronquée.

Dans ce mode de réalisation, la portion coronaire 3 de l'implant est définie par une paroi latérale 11 qui présente une première face vestibulaire 11a et une deuxième face palatine 11b, laquelle face palatine 11b est dans une position décalée vers l'extrémité cervicale $E_c$ par rapport à celle de la face vestibulaire 11a selon l'axe longitudinal $a_L$.

La face palatine est la face qui est destinée à être orientée vers le palais de la cavité buccale après la pose de l'implant.

La face vestibulaire est la face opposée à la face palatine.

En outre, dans ce type d'implant, la concavité de la portion coronaire est à double pente.

En outre, comme l'illustre la figure 4, de manière avantageuse, le corps de tête 10a présente au moins une partie caractérisée par une section transversale substantiellement polygonale (carrée 10', pentagonale 10", hexagonale 10'''), la cavité 10b du pilier étant de forme polygonale complémentaire à celle du corps de tête 10a. Comme le montre cette figure, les sections transversales sont des sections transversales polygonales festonnées qui présentent des bords arrondis qui prennent la forme de biseaux.

Pour tous les modes de réalisations décrits ci-dessus, un matériau ostéo-stimulant peut être déposé en surface du corps d'ancrage, en particulier en surface de la portion coronaire de l'implant, de façon à stimuler la reprise osseuse une fois l'implant placé sur le site d'implantation. Dans ce contexte, l'espace créé entre les crêtes des spires du filet constituent des réservoirs du matériau ostéo-stimulant.

## Comparaisons par modélisation d'un implant dentaire classique de l'état de la technique avec un implant dentaire selon l'invention

Des modélisations par éléments finis (à l'aide du logiciel Samcef version 16 de la firme SAMTECH) ont été réalisées sur des modèles d'implants tridimensionnels (réalisés avec le logiciel CREO version 2 de la firme PTC) afin de comparer, au niveau mécanique, un implant dentaire classique de l'état de la technique et un implant suivant l'invention, ces deux implants étant formés en alliage de titane Ti6AL4V (avec un module de Young fixé à 110 GPa pour le calcul).

Ces modélisations ont été réalisées afin de déterminer et de comparer (1) les surfaces de contact globales de l'implant dentaire avec l'os dense et l'os spongieux, (2) les contraintes de compression exercés d'une part dans l'os dense et d'autre part dans l'os spongieux et (3) les contraintes de compression exercés au sein de l'implant dentaire lui-même lorsqu'une force prédéterminée est appliquée selon l'axe longitudinal ($a_L$) de l'implant dentaire au niveau de son extrémité cervicale ($E_C$).

La force considérée et appliquée dans le cadre de ces modélisations par éléments finis a été fixée à 150 N, ce qui correspond à une force de mastication molaire moyenne (Guillaume Odin. Modélisation numérique de l'os mandibulaire appliquée à l'implantologie dentaire et maxillo-faciale. Modeling and Simulation. Ecole Nationale Supérieure des Mines de Paris, 2008).

Les caractéristiques de chacun de ces implants dentaires sont reprises au tableau 1 ci-dessous :

Tableau 1 :

|  | Implant dentaire classique de l'état de la technique | Implant dentaire suivant l'invention |
|---|---|---|
| Longueur (L1) | 8,7 mm | 8,7 mm |
| Diamètre nominal ($d_n$) | 4,27 mm | 4,27 mm |
| Diamètre externe ($d_e$) | 4 mm | 2 mm |
| Rapport $d_n/d_e$ | 1,067 | 2,135 |

Par ailleurs, afin de réaliser ces modélisations par éléments finis, les valeurs suivantes de modules de Young (module d'élasticité) ont été fixées pour les différents éléments à prendre en compte. Ces valeurs sont reprises au tableau 2 ci-dessous :

Tableau 2 :

|  | Module de Young (MPa) |
|---|---|
| Os dense | 3000* |
| Os spongieux | 300* |
| Implant dentaire | 110.000 |
| * Guillaume Odin. Modélisation numérique de l'os mandibulaire appliquée à l'implantologie dentaire et maxillo-faciale. Modeling and Simulation. Ecole Nationale Supérieure des Mines de Paris, 2008. | |

Les résultats obtenus sont repris dans le tableau 3 ci-dessous :

Tableau 3 :

|  | Implant dentaire classique de l'état de la technique | Implant dentaire suivant l'invention |
|---|---|---|
| Surface de contact globale (avec l'os dense et l'os spongieux) | 132,3 mm$^2$ | 150,3 mm$^2$ |
| Contrainte de compression exercée dans l'os dense | 83,1 MPa | 100,9 MPa |
| Contrainte de compression exercée dans l'os spongieux | 6,7 MPa | 7,1 MPa |
| Contrainte de compression exercée dans l'implant dentaire | 7,7 MPa | 8,5 MPa |

Comme on peut le constater, la surface de contact globale de l'implant dentaire suivant l'invention avec l'os dense et l'os spongieux est augmentée. Par ailleurs, les contraintes de compression respectivement exercées dans l'os dense, dans l'os spongieux et dans l'implant sont également augmentées pour un implant suivant l'invention dont le rapport $d_n/d_e$ est compris entre 2 et 4 (rapport $d_n/d_e$ = 2,135 selon l'implant suivant l'invention considéré lors des modélisations par éléments finis).

Les augmentations de mise en compression des os dense et spongieux grâce à un implant dentaire selon l'invention sont particulièrement avantageuses puisqu'elles permettent de stimuler les tissus osseux de telle sorte qu'ils se reforment plus rapidement et d'autant mieux autour de l'implant dentaire.

Il est bien entendu que la présente invention n'est en aucune façon limitée aux formes de réalisations décrites ci-dessus et que bien des modifications peuvent y être apportées sans sortir du cadre des revendications annexées.

**Revendications**

**1.** Implant dentaire (1) formé d'un corps d'ancrage (2) défini entre une extrémité apicale ($E_a$) et une extrémité cervicale

($E_c$), lequel corps d'ancrage (2) est un corps de première longueur prédéterminée $L_1$ et présente sur sa surface externe et le long de toute ladite première longueur prédéterminée au moins un filet (4), ledit corps d'ancrage (2) comprenant sur au moins une portion coronaire (3) de l'implant (1) une partie dudit au moins un filet (4) présentant un diamètre nominal $d_n$, lequel implant est **caractérisé en ce que** ledit diamètre nominal $d_n$ est supérieur à un diamètre externe $d_e$ dudit corps d'ancrage (2) sur ladite portion coronaire (3) dans un premier rapport $d_n / d_e$ compris entre 2,00 et 4,00, de préférence entre 2,00 et 3,00.

2. Implant dentaire selon la revendication 1, dans lequel ledit corps d'ancrage est au moins en partie de forme sensiblement cylindrique.

3. Implant dentaire selon la revendication 1 ou 2, dans lequel ledit corps d'ancrage présente une forme conico-cylindrique ou conique de conicité convergente vers ladite extrémité apicale ($E_a$).

4. Implant dentaire selon l'une quelconque des revendications précédentes, dans lequel ladite portion coronaire (3) est définie par une paroi latérale (11) qui présente une première face vestibulaire (11a) et une deuxième face palatine (11b), laquelle face palatine (11b) est dans une position décalée vers ladite extrémité cervicale ($E_c$) par rapport à celle de la face vestibulaire (11a) selon un axe longitudinal ($a_L$) traversant le corps d'ancrage (2) et reliant ladite première extrémité cervical ($E_c$) à ladite extrémité apicale ($E_a$).

5. Implant dentaire selon l'une quelconque des revendications précédentes, dans lequel ledit corps d'ancrage (2) présente, à son extrémité apicale ($E_a$), au moins une encoche (6) de taraudage constituée d'au moins un évidement longitudinal, de préférence ménagé depuis l'extrémité apicale ($E_a$) vers l'extrémité cervicale ($E_c$) du corps d'ancrage (3).

6. Ensemble prothétique comprenant :

   - ledit implant selon l'une quelconque des revendications 1 à 5 ; et
   - un élément transgingival (9) agencé pour être relié à la portion coronaire (3) du corps d'ancrage (2) et destiné à supporter un élément prothétique.

7. Ensemble prothétique selon la revendication 6, dans lequel ledit élément transgingival est un col (9') qui fait saillie à partir de l'extrémité cervicale ($E_c$) d'implant et qui est disposé dans le prolongement de la portion coronaire (3) du corps d'ancrage (2).

8. Ensemble prothétique selon la revendication 6, dans lequel élément transgingival est un pilier (9") relié, de préférence de manière amovible, par un moyen de connexion (10) à ladite portion coronaire (3) du corps d'ancrage (2).


**Patentansprüche**

1. Zahnimplantat (1) gebildet aus einem Verankerungskörper (2), definiert zwischen einem apikalen Ende ($E_a$) und einem zervikalen Ende ($E_c$), wobei der Verankerungskörper (2) ein Körper mit einer ersten vorbestimmten Länge $L_1$ ist und auf seiner äußeren Oberfläche und entlang der gesamten ersten vorbestimmten Länge zumindest ein Gewinde (4) aufweist, wobei der Verankerungskörper (2) auf zumindest einem koronaren Abschnitt (3) des Implantats (1) einen Abschnitt des zumindest einen Gewindes (4) umfasst, welcher einen Nenndurchmesser $d_n$ aufweist, wobei das Implantat **dadurch gekennzeichnet ist, dass** der Nenndurchmesser $d_n$ größer ist als ein Außendurchmesser $d_e$ des Verankerungskörpers (2) auf dem koronaren Abschnitt (3) in einem ersten Verhältnis $d_n / d_e$ von zwischen 2,00 und 4,00, bevorzugt zwischen 2,00 und 3,00.

2. Zahnimplantat nach Anspruch 1, wobei der erwähnte Verankerungskörper zumindest teilweise eine deutlich zylindrische Form aufweist.

3. Zahnimplantat nach Anspruch 1 oder 2, wobei der erwähnte Verankerungskörper eine konisch-zylindrische Form oder konische Form mit konvergierender Konizität zum apikalen Ende ($E_a$) hin aufweist.

4. Zahnimplantat nach irgendeinem der vorigen Ansprüche, wobei der koronare Abschnitt (3) durch eine Seitenwand (11) definiert ist, welche eine erste Facies labialis (11a) und eine zweite Facies palatina (11b) aufweist, wobei die Facies palatina (11b) sich in Bezug zur Position der Facies labialis (11a) in einer zum zervikalen Ende ($E_c$) hin gemäß einer Längsachse ($a_L$), die den Verankerungskörper (2) durchquert, verschobenen Position befindet und das erste zervikale Ende ($E_c$) mit dem apikalen Ende ($E_a$) verbindet.

5. Zahnimplantat nach irgendeinem der vorigen Ansprüche, wobei der Verankerungskörper (2), an seinem apikalen Ende ($E_a$), zumindest eine Gewindeeinkerbung (6) aufweist, bestehend aus zumindest einer länglichen Aussparung, bevorzugt führend vom apikalen Ende ($E_a$) zum zervikalen Ende ($E_c$) des Verankerungskörpers (3).

6. Prothesenbaugruppe, welche Folgendes umfasst:

   - das Implantat nach irgendeinem der Ansprüche 1 bis 5; und
   - ein transgingivales Element (9), das angeordnet ist, um mit dem koronaren Abschnitt (3) des Verankerungskörpers (2) verbunden zu werden, und dazu bestimmt ist, ein Prothesenelement zu tragen.

7. Prothesenbaugruppe nach Anspruch 6, wobei das erwähnte transgingivale Element ein Hals (9') ist, der zum Teil aus dem zervikalen Ende ($E_c$) des Implantats hervorragt und der in der Verlängerung des koronaren Abschnitts (3) des Verankerungskörpers (2) angeordnet ist.

8. Prothesenbaugruppe nach Anspruch 6, wobei das transgingivale Element eine Säule (9") ist, die, bevorzugt entfernbar, durch ein Verbindungsmittel (10) mit dem koronaren Abschnitt (3) des Verankerungskörpers (2) verbunden ist.

**Claims**

1. Dental implant (1) formed of an anchoring body anchoring body (2) defined between an apical end ($E_a$) and a cervical end ($E_c$), which anchoring body (2) is a body of first predetermined length $L_1$ and has on the outer surface thereof and along the whole of said first predetermined length at least one thread (4), said anchoring body (2) comprising on at least one coronal portion (3) of the implant (1), a part of said at least one thread (4) having a nominal diameter $d_n$, which implant is **characterised in that** said nominal diameter $d_n$ is greater than an outer diameter $d_e$ of said anchoring body (2) on said coronal portion (3) in a first $d_n/d_e$ ratio between 2.00 and 4.00, preferably between 2.00 and 3.00.

2. Dental implant according to claim 1, wherein said anchoring body is at least in part, of substantially cylindrical shape.

3. Dental implant according to claim 1 or 2, wherein said anchoring body has a conico-cylindrical or conical shape and features a conicity converging towards said apical end ($E_a$).

4. Dental implant according to any one of the preceding claims, wherein said coronal portion (3) is defined by a side wall (11) which has a first vestibular face (11a) and a second palatine face (11b), which palatine face (11b) is in an offset position towards said cervical end ($E_c$) with respect to that of the vestibular face (11a) along a longitudinal axis ($a_L$) intersecting the anchoring body (2) and connecting said first cervical end ($E_c$) to said apical end ($E_a$).

5. Dental implant according to any one of the preceding claims, wherein said anchoring body (2) has, at the apical end ($E_a$) thereof, at least one threading notch (6) constituted of at least one longitudinal recess, preferably arranged from the apical end ($E_a$) towards the cervical end ($E_c$) of the anchoring body (3).

6. Prosthetic unit comprising:

   - said implant according to any one of claims 1 to 5; and
   - a transgingival element (9) arranged to be connected to the coronal portion (3) of the anchoring body (2) and intended to support a prosthetic element.

7. Prosthetic unit according to claim 6, wherein said transgingival element is a collar (9') protruding from the cervical end ($E_c$) of the implant which is arranged in the extension of the coronal portion (3) of the anchoring body (2).

8. Prosthetic unit according to claim 6, wherein the transgingival element is a column (9") connected, preferably so that it can be removed, by a means for connecting (10) to said coronal portion (3) of the anchoring body (2).

EP 3 191 012 B1

*Fig. 1a*          *Fig. 1b*

*Fig. 3a*

*Fig. 3b*

*Fig. 3c*

Fig. 4

EP 3 191 012 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3466748 A
- WO 2011085982 A
- WO 2010021478 A

**Littérature non-brevet citée dans la description**

- Modélisation numérique de l'os mandibulaire appliquée à l'implantologie dentaire et maxillo-faciale. **GUILLAUME ODIN.** Modeling and Simulation. Ecole Nationale Supérieure des Mines de Paris, 2008